# EUROPEAN PATENT APPLICATION

(11) **EP 2 352 093 A1**
(43) Date of publication of application: **03.08.2011**
(21) Application number: 09814022.1
(22) Date of filing: 28.08.2009
(51) Int. Cl.: G06F 11/14

(54) **METHOD AND SYSTEM FOR CLEARING LOG FILES OF SERVICE SYSTEM**

(30) Priority: 16.09.2008 CN 200810222302
(71) Applicant: ZTE Corporation, Shenzhen, Guangdong 518057 (CN)
(72) Inventor: XIU, Wenfei, Shenzhen Guangdong 518057 (CN)
(74) Representative: Wihlsson, Joakim Per Magnus
(86) International application number: PCT/CN2009/073610
(87) International publication number: WO 2010/031302

(57) **Abstract**

A method and system for clearing log files of a service system are disclosed in the present invention. The method includes the following steps: configuring a log processing task item for each service of multiple services respectively; adding a log management task to a task list of an operating system; and the log management task clears a log file of each service in turn according to the log processing task item. According to the present invention, each time when a new service is added to a service system, or new log files are added to a current service, there is no need to develop a log processing module specially and modify the existing content about log processing, and test the log management module. Therefore, efficiency of development and testing can be improved effectively, and system update and maintenance be facilitated.

## Description

### TECHNICAL FIELD

The present invention relates to the management of log files of a service system, particularly to a method and system for clearing log files of a service system.

### BACKGROUND

A log of a service system involves a lot of content. Each service has functions such as user service processing, system fee deduction, data export, system backup, problem warning, etc. During the process of realizing the above-mentioned functions, in order to provide inquiry services for users, check reasons for discovered problems and be managed by operators, it is necessary to create log data. With the development of the service system, service types are increasing, and different types of log data are increasing, too. A plenty of logs occupy a very large space. Once the logs occupy the whole disk space, it is extremely possible that the system will break down. Therefore, the clearing of expired logs should be considered seriously.

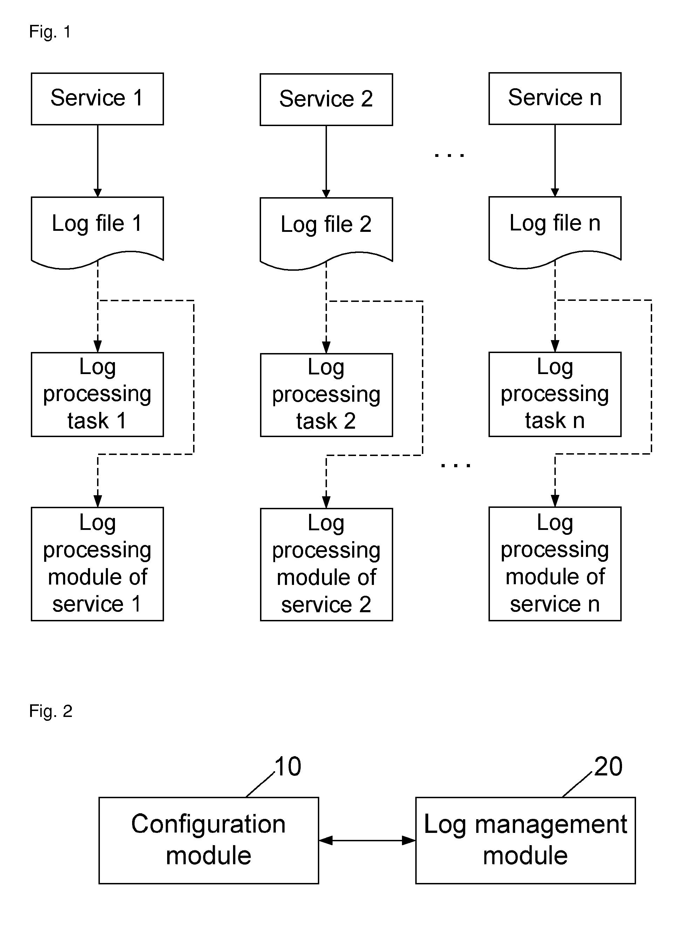

Fig. 1 is a schematic diagram illustrating a method for clearing log files in an existing technology. As shown in Fig. 1, the clearing of log files currently adopts a principle: to hold those who cause pollution responsible for cleaning up, i.e. the service that generates a log file should be responsible for clearing the log file, and the service system that generates log files should be responsible for maintaining and managing the log files.

There are two methods for clearing log files: one is that every service system corresponds to a log processing task, all log processing tasks are added to a task list of an operating system, and the operating system periodically scans the task list of the operating system and determines a task to be executed currently; the other is that every service system separately increases a log processing module, and each log processing module is responsible for clearing the log files generated by the service system to which the module belongs.

The problem with the current processing methods are: it is necessary to develop and test each log processing module and each log processing task separately, which not only increases development workloads but also is prone to error. Therefore, the existing technology should be improved and perfected.

### SUMMARY

In order to solve the problem in the existing technology, the present invention provides a method and system for clearing log files of a service system, to improve the efficiency of development and testing and facilitate system update and maintenance.

The technical solution provided by the present invention is as follows.

A method for clearing log files of a service system includes the following steps:
configuring a log processing task item for each service of multiple services respectively;
adding a log management task to a task list of an operating system; and
the log management task clears a log file of each service in turn according to the log processing task item.

In the above-mentioned method, the log processing task item may include: execution time, log file directory, log file name, log file clearing condition and log file clearing manner.

In the above-mentioned method, the log file clearing condition may be that: the size of a log file exceeds a predefined value, or the time of no modification to a log file exceeds a predefined time.

In the above-mentioned method, the log file clearing manner may include: deleting a log file, cutting a log file and retaining predefined lines, or deleting an original log file after compressing the log file.

The above-mentioned method may also include: the operating system periodically scans the task list of the operating system and determines a task to be executed currently.

In the above-mentioned method, the step of adding a log management task to a task list of an operating system may also include: configuring the log management task to operate daily.

In the above-mentioned method, the step that the log management task clears a log file of each service in turn according to the log processing task item may include: the log management task reads a log processing task item, and judges whether it is necessary to clear the log file according to the execution time in the read log processing task item; if yes, then the corresponding log file is cleared according to the log file clearing condition and the log file clearing manner in the read log processing task item; and after the log management task has completed the clearing of the current log file, it reads a next log processing task item, and judges whether it is necessary to perform the next task until each log processing task item is read and judged.

A system for clearing log files of a service system, comprises:
a configuration module, which is used to configure a log processing task item for each service of multiple services respectively; and
a log management module, which is used to clear a log file of each service in turn according to the log processing task item in the configuration module.

In the above-mentioned system, the log processing task item may include: execution time, log file directory, log file name, log file clearing condition and log file clearing manner.

In the above-mentioned system, the log file clearing condition may include: the size of a log file exceeds a predefined value, or the time of no modification to a log file exceeds a predefined time.

In the above-mentioned system, the log file clearing manner may be that: deleting a log file, cutting a log file and retaining predefined lines, or deleting an original log file after compressing the log file.

In the above-mentioned system, the log management module may read one log processing task item from the configuration module, and judge whether it is necessary to clear the log file according to the execution time in the read log processing task item; if yes, then the corresponding log file may be cleared according to the log file clearing condition and the log file clearing manner in the read log processing task item.

In the above-mentioned system, after the log management module has completed the clearing of the current log file, it may read a next log processing task item from the configuration module and judge whether it is necessary to perform the next task until each log processing task item in the configuration module is read and judged.

In the above-mentioned system, the log management module may also store a log file clearing status in its own log file.

Compared with the existing technology, by adopting the technical solution of the present invention, each time when a new service is added to a service system, or new log files are added to the current service, it is only necessary to add a new configuration item to the configuration module, there is no need for the new service to develop a log processing module specially, and the existing content about log processing is not required to be modified when new log files are added to the current service, therefore development workloads can be reduced. Because the log management module has undergone a strict test, there is no need to test the code of the log management module after configuring a new task item, thus a mass of time for testing is saved. That is to say, in the present invention it is only necessary to configure a required log processing task item in the configuration module, and to test the configurations of the configuration module in each test without the need of testing the log management module.

### BRIEF DESCRIPTION OF THE DRAWINGS

Fig. 1 is a schematic diagram illustrating a method for clearing log files of a service system in the existing technology;
Fig. 2 is a schematic diagram illustrating a structure of a system for clearing log files of a service system in the present invention;
Fig. 3 is a flowchart illustrating a method for clearing log files of a service system in the present invention; and
Fig. 4 is an example for applying the present invention to clear log files.

### DETAILED DESCRIPTION

The key point of the present invention is to change the existing development method for log file management of a service system, and use a common log management module to realize the functions that used to be repeatedly realized by each service system through uniform use of a configuration module and a configuration item.

The present invention will be described in details hereinafter with reference to the drawings and specific embodiments, so as to make the objects, technical solution and features of the present invention more clear.

As shown in Fig. 2, a system for clearing log files of a service system in the present invention mainly comprises:
a configuration module 10, which is used for configuring a log processing task item for each service of multiple services respectively; and a log management module 20, which is used for clearing the log file of each service in turn according to the log processing task item in the configuration module 10.

Wherein the log processing task item includes: execution time, log file directory, log file name, log file clearing condition and log file clearing manner.

The execution time is configured according to an actual demand, and it may be configured as daily execution, weekly execution, monthly execution, etc. The daily execution means executing once a day, for example, executing at 8:00 every day; the weekly execution means executing once a week, for example, executing on Monday every week; and the monthly execution means executing once a month, for example, executing on the first day of each month.

The log file name may be defined by adopting a command mode supported by the system so as to increase the flexibility of use.

The log file clearing condition refers to that the corresponding log file is cleared only when the condition is met, for example, the size of a log file exceeds a predefined value, or the time of no modification to a log file exceeds a predefined time.

The log file clearing manner is configured according to an actual demand, for example, deleting a log file, cutting a log file and retaining predefined lines, or deleting an original log file after compressing the log file.

The log management module 20 reads one log processing task item from the configuration module 10, and judges whether it is necessary to clear the log file according to the execution time in the read log processing task item; if yes, then the corresponding log file will be cleared according to the log file clearing condition and the log file clearing manner in the read log processing task item.

After the log management module 20 has completed the clearing of the current log file, it will read a next log processing task item from the configuration module 10 and perform the processing similar to the above, i.e., the log management module judges whether it is necessary to perform a next task item; if yes, then the corresponding log file will be cleared according to the log file clearing condition and the log file clearing manner in the read next log processing task item until each log processing task item in the configuration module is read and judged.

The log management module 20 also stores a log file clearing status in its own log file, for future check.

In a specific application of the system for clearing log files, the log management module thereof is bound to an operating system task, i.e. a log management task is added to a task list of an operating system, the operating system periodically calls the log management module, and then the log management module performs the clearing of log file in the above way.

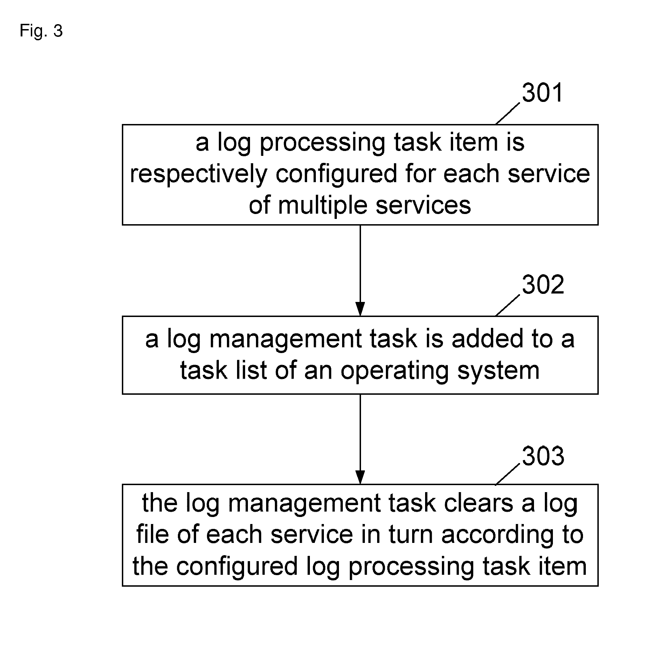

As shown in Fig. 3, the method for clearing log files of a service system in the present invention mainly includes the following steps.

Step S301: a log processing task item is configured respectively for each service of multiple services.

Wherein the log processing task item includes: execution time, log file directory, log file name, log file clearing condition and log file clearing manner. The log file clearing condition is: the size of a log file exceeds a predefined value, or the time of no modification to a log file exceeds a predefined time. The log file clearing manner is: deleting a log file, cutting a log file and retaining predefined lines, or deleting an original log file after compressing the log file.

Step S302: a log management task is added to a task list of an operating system.

In this step, the execution time of the log management task is also configured, for example, configuring the log management task to operate daily. The operating system periodically scans the task list of the operating system, and determines a task to be executed currently; when it is the execution time of the log management task, the log management task will be executed.

Step S303: the log management task clears a log file of each service in turn according to the configured log processing task item.

The log management task reads one log processing task item, and judges whether it is necessary to clear the log file according to the execution time in the read log processing task item; if yes, then the corresponding log file will be cleared according to the log file clearing condition and the log file clearing manner in the read log processing task item; and after the log management task has completed the clearing of the current log file, it will read a next log processing task item, and judge whether it is necessary to perform the next task until each log processing task item is read and judged.

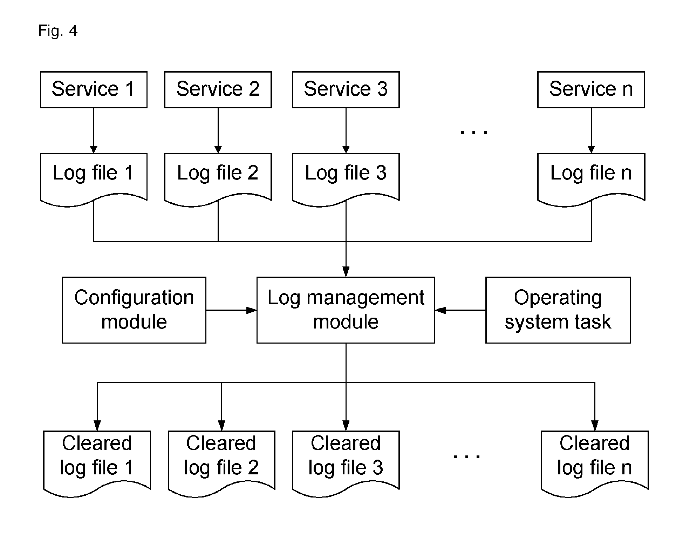

Fig. 4 is an example for applying the present invention to clear log files.

In Fig. 4, service 1, service 2, ..., and service n constitute a service system operated on a server, such as: a short message value-added service system, a traditional call value-added service system, etc. Each service will generate a log file based on system maintenance or other reasons while meeting user demands.

Log file 1, log file 2, ..., and log file n are logs generated by corresponding services based on system need or other reasons during an operation process. The log content is uniformly stored in one file which is used for the check by the office or developers. In the present invention, each service has its own log file, because sharing one log file by multiple services may result in confusion of log information and bring difficulty in problem analysis.

The configuration module configures one log processing task item for each service respectively. The log processing task item includes: execution time, log file directory, log file name, log file clearing condition and log file clearing manner.

The log management module automatically reads the configurations in the configuration module and performs corresponding processing based on the configurations. If the user configures several log processing task items, then the log management module will read each configuration item in turn, and determine whether to operate each configuration item according to the execution time therein; if yes, then the log files will be cleared according to the configurations in the configuration module.

After the log files are cleared, cleared log file 1, cleared log file 2, ..., and cleared log file n will be obtained.

The operating system task in Fig.4 refers to a task mechanism of the operating system. The log management module, as a task item of the operating system task, is scheduled and executed by a task scheduling mechanism of the operating system.

The execution of the task mainly involves the following judgment and operation in the configuration module:
1. judging whether it is necessary to operate the current configuration item on the current day (determined according to the execution time in it), if not, then jumping over the configuration item, and continuing to perform the judgment and processing operation on a next configuration item;
2. judging whether the path of the configured log file to be cleared is correct, and whether the log file to be processed exists, if the log file does not exist or the log file path does not exist, then notifying the user via a log, and judging whether it is necessary to process the log file configured for the current item according to the configurations;
   Considering the scalability of the module, the configuration for a log file name may consider the support to fussy matching, and the log file clearing condition may also support diversity, for example, the time of no modification to the log file, the size of the log file to be processed, etc., and these processing conditions may exist in parallel;
3. if the log file meets the processing conditions, it will be processed according to the configured processing manner;
   Considering the scalability of the log processing module, the log file may be processed in multiple manners as follows:
   deleting the log file;
   cutting the log file and retaining the predefined lines; and
   deleting the original file after compressing;
4. judging whether the log files of all configuration items have been checked and processed, if yes, then terminating the operation; if not, then taking the next configuration item and repeating the above operation.

Through the implementation of the present invention, each time when a new service is added to a service system, or new log files are added to a current service, it is only necessary to add a new configuration item to the configuration module, the new service is not required to develop a log processing module specially, and during the process of adding the new log files to the current service, it is not necessary to modify the existing content about log processing, so development workloads can be reduced. Because the log management module has undergone a strict test, there is no need to test the code of the log management module after configuring a new task item, thus a mass of time for testing is saved. That is to say, in the present invention, it is only necessary to configure a required log processing task item in the configuration module, and to test the configurations of the configuration module in each test without the need of testing the log management module.

Lastly, it should be noted that the above-mentioned embodiments are intended to illustrate the technical solution of the present invention only and not to limit the present invention. Those skilled in the art should understand that all modifications or equivalent substitutes of the technical solution of the present invention made without departing from the spirit and range of the technical solution of the present invention shall be within the protection scope of the present invention.

### INDUSTRIAL APPLICABILITY

After adopting the technical solution of the present invention, each time when a new service is added to a service system, or new log files are added to a current service, it is only necessary to add a new configuration item to the configuration module, the new service is not required to develop a log processing module specially, and during the process of adding the new log files to the current service, it is not necessary to modify the existing content about log processing, so development workloads can be reduced. At the same time, in each test, it is only necessary to test the configurations of the configuration module, and there is no need to test the log management module.

## Claims

1. A method for clearing log files of a service system, including:
configuring a log processing task item for each service of multiple services respectively;
adding a log management task to a task list of an operating system; and
the log management task clearing a log file of each service in turn according to the log processing task item.

2. The method as claimed in claim 1, wherein the log processing task item includes:
execution time, log file directory, log file name, log file clearing condition and log file clearing manner.

3. The method as claimed in claim 2 wherein the log file clearing condition includes:
the size of a log file exceeds a predefined value, or the time of no modification to a log file exceeds a predefined time.

4. The method as claimed in claim 2, wherein the log file clearing manner includes:
deleting a log file, cutting a log file and retaining predefined lines, or deleting an original log file after compressing the log file.

5. The method as claimed in claim 2, also including:
the operating system periodically scanning the task list of the operating system and determining a task to be executed currently.

6. The method as claimed in claim 5, wherein the step of adding a log management task to a task list of an operating system also includes: configuring the log management task to operate daily.

7. The method as claimed in any of claims 2 to 6, wherein the step that the log management task clears a log file of each service in turn according to the log processing task item includes:
the log management task reads one log processing task item, and judges whether it is necessary to clear the log file according to the execution time in the read log processing task item; if yes, then the corresponding log file will be cleared according to the log file clearing condition and the log file clearing manner in the read log processing task item; and
after the log management task has completed the clearing of the current log file, it will read a next log processing task item, and judge whether it is necessary to perform the next task until each log processing task item is read and judged.

8. A system for clearing log files of a service system, including:
a configuration module, which is used to configure a log processing task item for each service of multiple services respectively; and
a log management module, which is used to clear a log file of each service in turn according to the log processing task item in the configuration module.

9. The system as claimed in claim 8, wherein the log processing task item includes:
execution time, log file directory, log file name, log file clearing condition and log file clearing manner.

10. The system as claimed in claim 9, wherein the log file clearing condition include:
the size of a log file exceeds a predefined value, or the time of no modification to a log file exceeds a predefined time.

11. The system as claimed in claim 9, wherein the log file clearing manner includes:
deleting a log file, cutting a log file and retaining predefined lines, or deleting an original log file after compressing the log file.

12. The system as claimed in claim 9, 10 or 11, wherein the log management module reads one log processing task item from the configuration module, and judges whether it is necessary to clear the log file according to the execution time in the read log processing task item; if yes, then the corresponding log file will be cleared according to the log file clearing condition and the log file clearing manner in the read log processing task item.

13. The system as claimed in claim 12, wherein after the log management module has completed the clearing of the current log file, it will read a next log processing task item from the configuration module and judge whether it is necessary to perform the next task, until each log processing task item in the configuration module is read and judged.

14. The system as claimed in claim 8, wherein the log management module also stores a log file clearing status in its own log file.
